# EUROPEAN PATENT SPECIFICATION

(11) **EP 4 102 054 B1**
(45) Date of publication and mention of the grant of the patent: **08.04.2026**
(21) Application number: 21751479.3
(22) Date of filing: 03.02.2021
(51) Int. Cl.: F03D 1/06, B29D 99/00

(54) **PROCESS FOR THE MANUFACTURE OF A WIND TURBINE GENERATOR BLADE AND WIND TURBINE GENERATOR BLADE OBTAINED THEREBY**
VERFAHREN ZUM HERSTELLEN EINES WINDTURBENGENERATORBLATTES UND DADURCH ERHALTENES WINDTURBENGENERATORBLATT
PROCÉDÉ DE FABRICATION DE LA PALE D'UN AÉROGÉNÉRATEUR ET PALE D'AÉROGÉNÉRATEUR AINSI OBTENUE

(30) Priority: 05.02.2020 ES 202030089
(43) Date of publication of application: 14.12.2022
(73) Proprietor: M. Torres Diseños Industriales, S.A.U., 31119 Torres De Elorz (Navarra) (ES)
(72) Inventor: TORRES MARTINEZ, Manuel, "deceased" (ES)
(74) Representative: Cabinet Beau de Loménie
(86) International application number: PCT/ES2021/070080
(87) International publication number: WO 2021/156533

(56) References cited:
- EP-A1- 2 497 941
- EP-A1- 3 144 526
- EP-A1- 3 144 526
- WO-A1-2015/051803
- WO-A1-2015/051803
- GB-A- 2 569 571
- US-A1- 2015 110 632
- US-A1- 2017 363 063

## Description

### Technical field

The present invention is related to the structures sector, proposing a process for manufacturing a structure that is configured by a series of longitudinal profiles attached together that offers a topological optimisation and weight reduction in the structures in which it is applied to combine it with an attachment or connection system between structural components that enables a simple, light and economical connection between them for the attachment and load transmission thereof. The present invention is preferably applicable in the wind sector, for the development of structural components and their attachment and integration in wind turbine blades, enabling the development of structures that are cheaper, lighter and easier to manufacture and transport, but reaching final sizes greater than those admissible today in the wind sector and especially the onshore wind sector.

### State of the art

In the wind energy harvesting sector, the current trend is to increasingly increase the length of the wind turbine blades, so that the area swept by them is greater and therefore the energy generated is in turn higher in similar wind conditions, thus reducing energy costs.

The development of larger wind turbine blades also involves an increase in the weight of the same. Moreover, the increase in weight follows an exponential trend along with length, this being much more significant in increasingly longer blades.

The wind sector has developed a series of solutions and alternatives to combat this effect, and through innovation in structures and materials it has managed to suit market needs. Initially manufacturing in composite materials reinforced by fibreglass, and the current introduction of carbon fibre in the latest models of wind turbine blades have been decisions that have allowed this size to be increased.

The structural configuration of the blade has also been changing, seeking to optimise weight and the structural response of the same. However, most of the usual concepts have focussed on monolithic structures for the main structural reinforcements in wind turbine blades, also known as caps, sometimes with the use of sandwich structures with foams or balsa wood as filler material.

These solutions, in principle advantageous with respect to the state of the art at certain moments in the evolution of wind technology, do not make use of a topological optimisation of the structures as other sectors do, wherein the relevance of the weight of the structures is notably more important, such as the aeronautical sector. However, the structural and manufacturing solutions of the aeronautical sector usually involve much higher costs than those that can be assumed by the wind sector.

That is why a blade structural solution is required that offers a reduction in structural weight with respect to current solutions while maintaining equivalent or even more efficient cost levels for the components and the manufacturing thereof.

In this regard, various solutions have been presented with the aim of offering an internal reinforcement system for the blade. An example of this is patent US2019358911, which presents a method for assembling a double 'T'-shaped reinforcement inside the profile of the blade, in the area where the distance between the skin of the intrados and the extrados is greater. Said solution opts for a simple beam the volume and weight of which are less than in hollow beams and for increasing the thickness of the skin in the areas where this reinforcement had to be fastened. However, it is not a viable or reliable method since the installation of the same is very cumbersome and complicated and the shape of the beam may not be sufficient to withstand the twists in the longitudinal axis of the blade.

Another example includes inventions PL2622211 and PL1808598 showing a reinforcement model in the form of a hollow rectangular or square beam made of a composite material, polymer matrix with incorporated fibres. This solution is designed to be manufactured in two halves, having to subsequently attach them to form the square. Against this manufacturing method and design of the internal reinforcement is the fact that the load distribution along the profile is not going to be ideal since the attachment points can distort the forces that the beam has to transmit, which can be translated into a deformation and/or breakage of the profile of the blade. With this solution, the ease of manufacture would not be offset by the loss of reliability in the function of the beam.

Invention ES2496167 proposes a reinforced plate that connects the trailing edge of the blade with the first transversal stringer of the box on the inside, along the chord of the profile. Its purpose is to increase the resistance of the same for loads to be supported that occur in the direction of the edge and of the flap. In addition to this, it shows a greater thickness in the extrados and intrados skins that remain inside the box. In this case, the stringers that would form the box have a variable geometry to be suited along the entire blade, the transversal stringer having to be suited thereto to be attached to the previous ones. The assembly has a complicated design, which results in a less economical manufacture, and it also remains to be verified whether the increased thickness of the skins with the lateral stringers would be sufficient to support all the loads.

The existence of all these solutions confirms the efforts that are being made to find an optimal structural solution for larger blades, but the fact of being able to have large-sized blades also leads to a series of problems, both in terms of manufacturing and transport. For several years, manufacturing, but especially logistics, have been a serious problem in the wind sector since, commonly, the blades are manufactured at a location and then must be transported to the installation site thereof.

Long blades are usually transported by road to their destination, requiring special transport or vehicles for doing so. From a certain length, around 45 metres, the blades are considered oversized and overweight cargo, so they require an escort during the journey in addition to the aforementioned special transport. Usually, the transport of blades also requires the route to be prepared and/or suited from the point of departure to the point of arrival, normally involving road modifications and special licences, which also vary according to the country since the legislation is different in each one. All these complex procedures involve time, and above all extra costs. In reality, components over 80m in length are impossible to transport, thus limiting the size of current rotors and the growth of power in onshore wind power.

Other alternatives to transporting blades by road are transport by ship, train or even lifting them by helicopter. The excessive difficulty involved in transport by these means, as well as the slowness of transport or the demanding security measures required, entails a significant increase in costs. In addition, both in these means and in road transport, there are limitations on the maximum dimensions of the blade that can be transported, imposing a maximum chord, a maximum root diameter and a maximum amount of pre-bending and pre-curving.

In view of the complexity described, the sector opted for designing segmented blades, such that each segment of the same had such a length that would allow easier handling and transport operations and at a lower cost. In contrast, the segmented blade design requires an attachment of the different segments at the destination location for the subsequent lifting of the complete blade to the hub.

Blade segments can be attached either mechanically, by means of adhesives or a combination of both. In any case, it is essential that the attachment be capable of supporting and transmitting the aerodynamic loads generated by the blade in a reliable and robust way, so that it does not alter the aerodynamics of the profile or the behaviour of the wind turbine in general, without involving increases in weight and cost of the overall product. Neither should the attachment significantly alter the aerodynamics of the blade. It is also likely, especially in attachments with the presence of adhesive, that the tolerances and the attachment process between sections must be very careful and accurate.

The current situation in the sector, wherein segmented blade proposals have been developed for different blade sizes, is that there is no feasible and robust solution at the moment, among other reasons due to the complexity of the attachment of a structure that distributes load transmission by skins and by internal reinforcements by way of stringers; these are double, complex and heavy attachments that lead to a non-competitive solution.

Patent WO2015011291 presents a system for assembling two blade segments in a detachable manner by means of an assembly device made up of a mechanism with two chords that attach or separate the segments. Its advantage is that the blade can be disassembled again, but its drawback is the complexity of the manufacture and attachment thereof, as well as the impossibility of achieving an optimised transport for the same.

Patent US201929343 attempts to overcome the transport problem by sectioning the blade and to avoid using attachment elements, it proposes using a mobile platform for attaching two sections of the blade at the assembly site. However, even if the platform they propose is mobile, it would be a high cost for the installation, since it is not a manageable or simple solution since it must also be taken into account the need to level all the elements on a natural terrain, the need for a controlled atmosphere inside the platform so that there are no interferences during the attachment of sections and the energy consumption required by it in a place where access thereto may be affected and a generator of additional energy must also be carried for the system to work.

Patent CN206158927 presents a segmented blade model in two portions that is attached by a series of double-threaded screws distributed along the entire edge of the segments to be attached, with the drawback that all the screws must be threaded simultaneously and accurately and that subsequently the hole that remains in the attachment must be covered to maintain the aerodynamic profile of the blade.

Patent CN107013408 proposes a blade model that is segmented into two or more segments, and an assembly method consisting of steel framings, which will have double rows of holes on the edges wherein bolts will be inserted for fastening the segments, maintaining the stringers, which will be segmented and will also be attached to the steel frame, entailing more weight in the set due to the materials used and a high number of mechanical attachments that will increase maintenance cost and time.

Patent CN106523291 presents a blade segment assembly design using two types of mechanical attachments, such as screws that will be inserted into the skins to be attached and connectors that will go inside the blade and that will adjust the assembly, causing an increased cost and maintenance difficulty.

Patent CN107013408 presents a process for transporting segmented blades on a large scale and assembling them, but more focused on maintenance tasks wherein the blade segment that has deteriorated can be replaced. The transport of the segment to be replaced and the attachment of the same by means of bolts are contemplated.

International patent application publication WO 2015/051803 A1 discloses yet another wind turbine blade manufacturing process.

Therefore, definition is required of a manufacturing process for these blades, as well as a blade design that can be formed as a single element, but that can also be segmented in a light, robust and economical way, into at least two structural segments; such that a more economical and simple transport of large-sized blades is achieved, and that further presents a simple and reliable method of assembling the segments that make up the blade, at the installation site of the wind turbine, in the corresponding wind farm.

With all this, in order to opt for an efficient and economical installation of segmented blades at the installation site of the wind turbine, it is required that both the attachment system and the internal reinforcement structure of the blades are simple, light, economical and that do not impair the efficiency of the machine set.

### Object of the invention

The invention proposes a manufacturing process according to claim 1 for manufacturing a wind turbine blade, the general body of which can be formed by a single element or by at least two structural segments that enables the wind turbine blade to be divided into sections, facilitating the manufacture and transport thereof. In addition, the invention proposes a novel system for attaching the general body of the blade to a root part, through which the blade will be attached to the corresponding hub. This novel attachment system is also applicable for attaching the structural segments of the blade, when the general body of the blade offers a segmented embodiment. This attachment can be carried out at the point of installation of the wind turbine and enables a blade to be obtained with a structural concept that optimises the use of materials and reduces the overall weight of the final product, obtaining a lighter and more stable, and therefore more efficient wind turbine blade;

The structure proposed for manufacturing the general body of the blade or of each structural segment of said general body, when segmented into sections, is based on two main components, on the one hand, an outer skin that acts as a fairing, without structural responsibility, and, on the other hand, a central box that supports the set of loads generated by the blade during the operation thereof.

The structure of the central box is based on the attachment of a series of adjoining longitudinal profiles to form the desired geometry. These profiles, attached to one another through mechanical, chemical or other means, and preferably by means of chemical adhesives, form the central box. The outer skin is attached to said central box again through mechanical, chemical or other means, and preferably by means of chemical adhesives.

The set of longitudinal profiles is divided into two groups of profiles, the front and rear lateral profiles that cover the central box on the leading and trailing edge faces, respectively; and the central profiles that cover the faces of the box that correspond to the suction face and the pressure face.

Additionally, the structure of the proposed blade incorporates, according to a preferred embodiment, a series of reinforcement components in different sections of the blade, by way of structural frames. These frames make it possible to stiffen the structure, maintaining the external aerodynamic geometry controlled. The separation between the blade sections that incorporate such frames must be determined for the specific design of a specific blade based on the envelope thereof and the loads to be supported.

In a preferred configuration of the invention, the geometry of the central longitudinal profiles is preferably a "U"-shaped geometry, although they may have a "U" configuration with additional webs at the ends, or any structurally admissible section, allowing the attachment between profiles through the application of adhesive or other attachment means for attaching on the wings of the "U" section. Preferably, the lateral longitudinal profiles and the central longitudinal profiles, and also the reinforcement sections or frames, are made of a composite material, and preferably, of a composite material reinforced with carbon fibre.

In a preferred configuration of the invention, the geometry of the lateral longitudinal profiles is suited to the separation between skins provided along the blade, which varies from the root to the tip, so that a central box structure can be made with the central longitudinal profiles and the lateral longitudinal profiles.

In a preferred configuration of the invention, the geometry of the central longitudinal profiles is identical among all of them, allowing a simpler and cheaper manufacture than the manufacture of a different profile geometry for each one of them.

On this configuration of the blade or of each structural segment of the blade, the invention in turn proposes, within the blade manufacturing process, a novel attachment system between the body of the blade and a root part that allows the attachment of the blade to the corresponding hub. This attachment system is also applied for the attachment of every two structural segments, of the set of structural segments that have to form the general body of the wind turbine blade, offering a simple, light and economical attachment system, but at the same time robust and safe, through the introduction of a deformable material that connects and ties the structural segments together.

In the simplest blade version, which would be the one in which the general body thereof is formed by a single element, the attachment between the general body of the blade and a root part that allows the attachment of the blade to the corresponding hub is carried out in the following manner: having determined the central box by a series of longitudinal profiles, it is possible to define one or a series of cavities. Well, according to the invention, the introduction of an element that we will identify as a receiver component, intended to receive the mouth of the central box therein, is proposed. This receiver component has a geometry that allows the mouth of the central box to be embedded inside it and leads to the lateral closure of the cavities generated by the longitudinal profiles.

When the general body of the blade is made up of two or more sections of structural segments, the attachment process between them is the same as that followed for the assembly of the root part, logically introducing in this case two receiver components instead of one, as there are two central boxes of the two structural segments to be attached.

Inside these laterally closed cavities a deformable material is introduced, which covers the inside of the same. The deformable material, which is preferably an elastomer, will be placed inside at least one of the cavities defined between the general body of the blade and the receiver component and, likewise, in the case of segmented blades, it will be fitted in at least one of the cavities delimited between the corresponding cavities defined in the general body of the blade and the receiver component, in each one of the structural segments of the blade.

The deformable material will have a geometry that enables one or a series of pressure application means to be suited and integrated on itself, these means being able to be mechanical, hydraulic, pneumatic, piezoelectric or of another type, and preferably mechanical. In a preferred solution of the invention, said pressure means will be formed by one or a series of screws and their respective nuts. In this solution, the receiver component will in turn have a geometry in correspondence with the geometry of the deformable material to allow the integration of these pressure means based on screws and threads.

Once the deformable material is placed in position, pressure will be applied through the pressure application means on said deformable material. This material, given the pressure received, will deform and transfer that pressure to the contours of the cavities where it has been incorporated.

The pressure applied by the deformable material on the wall of the cavities will greatly increase the friction between the deformable material and the walls of the cavity or cavities, which makes it possible to avoid movement between the different parts and the load transmission. Additionally, this solution will achieve complete contact of the entire geometry of the different parts, distributing the stresses and limiting the concentration of loads in the same.

Finally, the receiver component will have a series of mechanical, chemical or other, preferably mechanical, attachment means, either for attachment thereof to a root part for connection to the hub, or for attachment thereof with another opposite receiver component of another structural segment in the case of a segmented blade, thus generating a single cohesive structure.

### Description of the figures

Figure 1 is a perspective view showing the final end of a blade (1).
Figure 2 is a perspective view showing a structural segment (1.1) of blade (1) in the final portion thereof.
Figure 3 is a perspective view of the longitudinal profiles (3.1, 3.2 and 3.3) that make up the central structural box (3), having alternately shaded the longitudinal profiles (3.1) in order to better distinguish them from each other.
Figure 4 is a perspective view representing a rib (4).
Figure 5 shows a perspective view of a rib (4) in the version in which it has a central hollowing (4.1).
Figure 6 is a view like the one in figure 4 but with a rib without central hollowing (4.1).
Figure 7 is a perspective view of the rib (4) of the previous figure.
Figure 8 is a perspective view showing the attachment between a structural segment (1.1) of the blade (1) and a root part (5) through a receiver component (9).
Figure 9 shows the components of figure 8 in the assembly phase and partially cross-sectioned.
Figure 10 is a view like the one in Figure 8, but with a partial cross section of the receiver component (9) and the structural segment (1.1) of the blade (1), in order to be able to appreciate the attachment between them.
Figure 11 shows an enlarged detail of the attachment indicated in figure 10.
Figure 12 is a perspective view, in which the attachment between two structural segments (1.1) of a blade (1) can be seen.
Figure 13 shows the components of figure 12 in the assembly phase.
Figure 14 is a view like the one in figure 12, but partially cross-sectioned and with the covers (1) represented in the assembly phase.
Figure 15 is a cross-sectional elevation view showing the attachment between two structural segments (1.1) of a blade (1).
Figure 16 is a perspective view showing a receiver component (9).
Figure 17 is the upper plan view of Figure 16.

### Detailed description of the invention

The object of the invention is a process for manufacturing a wind turbine blade, the general body (1) of which can be formed by a single element or present a structure segmented into sections and formed by two or more structural segments (1.1) that enable the division into sections of the wind turbine blade, facilitating the manufacture and transport thereof.

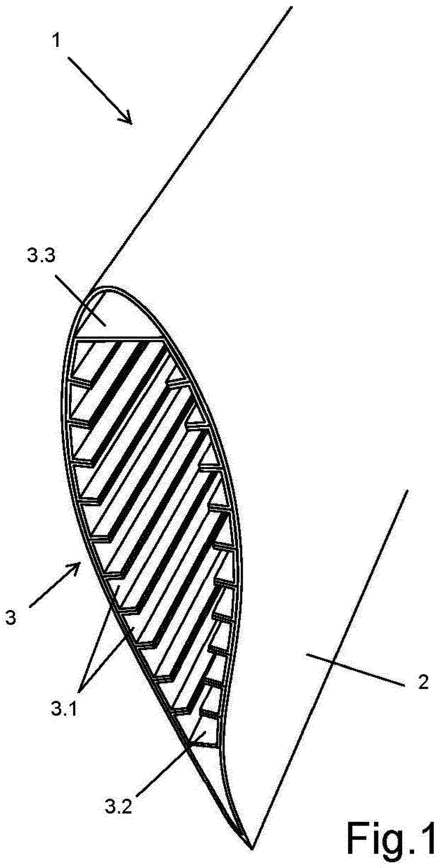

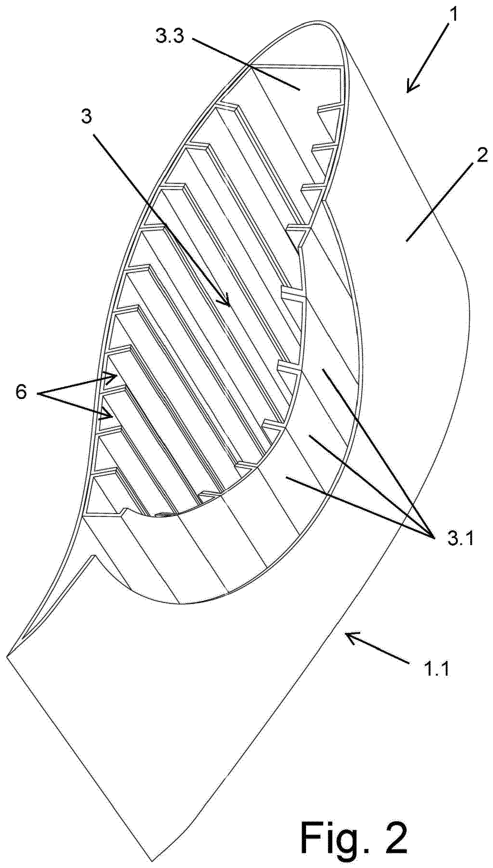

As shown in figures 1 and 2, the general body (1) of the blade is made up of two main components, on the one hand, an outer skin (2) that acts as a fairing without structural responsibility, and, on the other hand, a central box (3) that supports the set of loads generated by the blade (1) during the operation thereof.

This same structuring is met in the event that the general body (1) of the blade is formed by sections of two or more structural segments (1.1) which enables the division of the wind turbine blade into sections, to facilitate the manufacture and transport thereof: so that these structural segments (1.1) are arranged consecutively one after the other and are attached together at the place where the blade is assembled on the corresponding wind turbine.

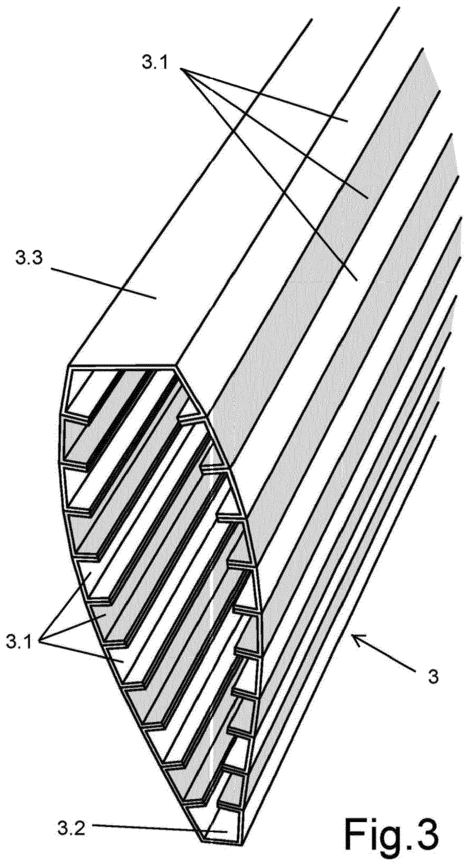

The structure of the central box (3), as can be seen in figure 3, is based on the attachment of a series of continuous longitudinal profiles (3.1, 3.2 and 3.3) to form the desired geometry. These profiles (3.1, 3.2 and 3.3) are attached to one another by means of mechanical, chemical or other means, and, according to a preferred solution, by means of chemical adhesives, thus forming the central box (3). The outer skin (2) is attached to said central box (3) again through mechanical, chemical or other means, and preferably by means of chemical adhesives.

The longitudinal profiles (3.1) that will be identified as central longitudinal profiles cover the faces of the box (3) corresponding to the suction face and the pressure face. The longitudinal profiles (3.2 and 3.3) that will be identified as lateral longitudinal profiles, cover the central box (3) on the faces of the trailing edge and the leading edge, respectively.

According to a preferred, but not limiting, configuration of the central box (3), the geometry of the central longitudinal profiles (3.1) is a "U"-shaped geometry, although they may have a "U" configuration with additional webs at the ends, or any structurally admissible section, allowing the attachment between profiles through the application of adhesive or other attachment means for attaching on the wings of the selected section. In this sense, the longitudinal profiles (3.2 and 3.3) also have wings to establish the adhesive attachment thereof with the corresponding longitudinal profiles (3.1).

According to a preferred practical embodiment, it has been provided that the geometry of the central longitudinal profiles (3.1) is identical among all of them, allowing a simpler and cheaper manufacture than the manufacture of a different profile geometry for each one of them.

Also according to a preferred embodiment of the invention, the geometry of the lateral longitudinal profiles (3.2 and 3.3) is suited to the separation between skins (2) provided along the general body (1) of the blade, which varies from the root to the tip, so that a central box structure (3) can be made with the central longitudinal profiles (3.1) and the lateral longitudinal profiles (3.2 and 3.3).

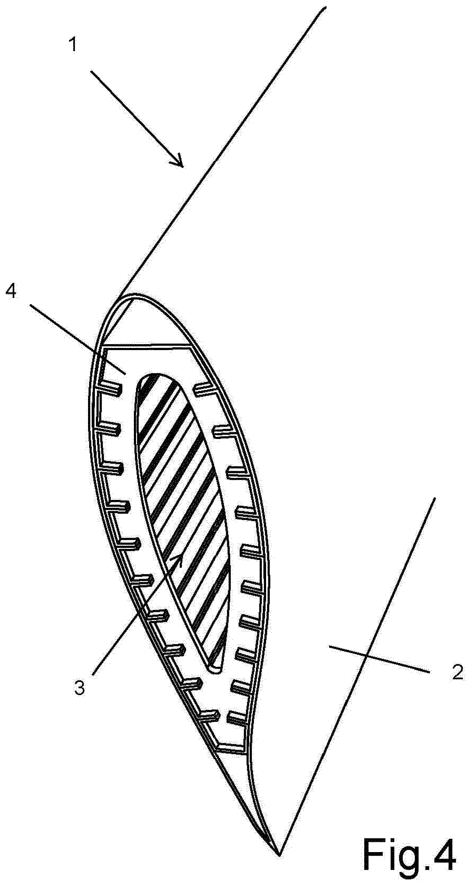

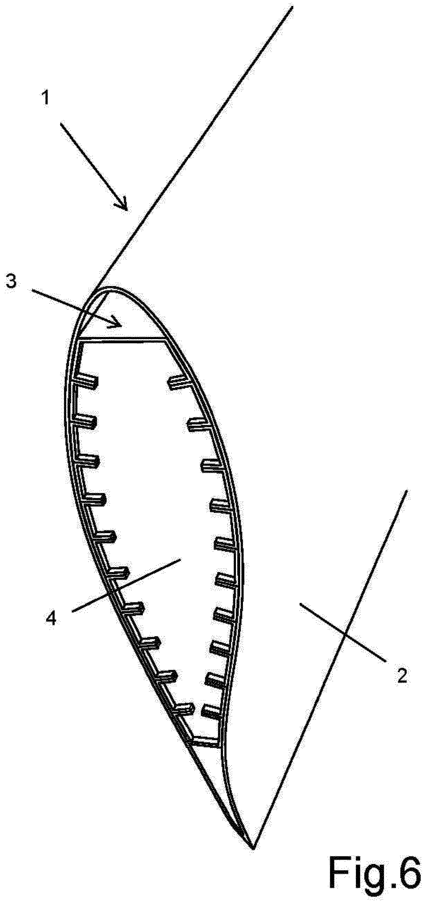

Additionally, the structure of the general body (1) of the blade, according to a possible preferred practical embodiment, represented in figures 4 and 6, can incorporate, in different sections of the general body (1) of the blade, a series of reinforcement components, by way of structural frames, identified with the numerical reference (4). These frames (4) make it possible to stiffen the structure, maintaining the external aerodynamic geometry controlled. The separation between the blade sections that incorporate such frames (4) must be determined for the specific design of a specific blade based on the envelope thereof and the loads to be supported.

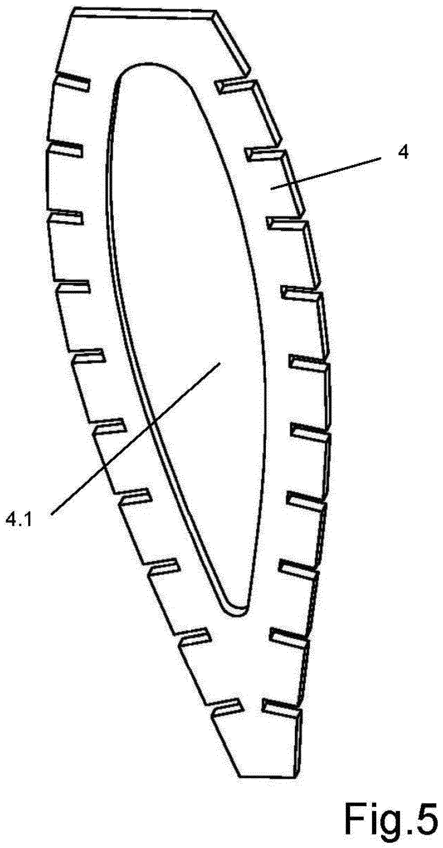

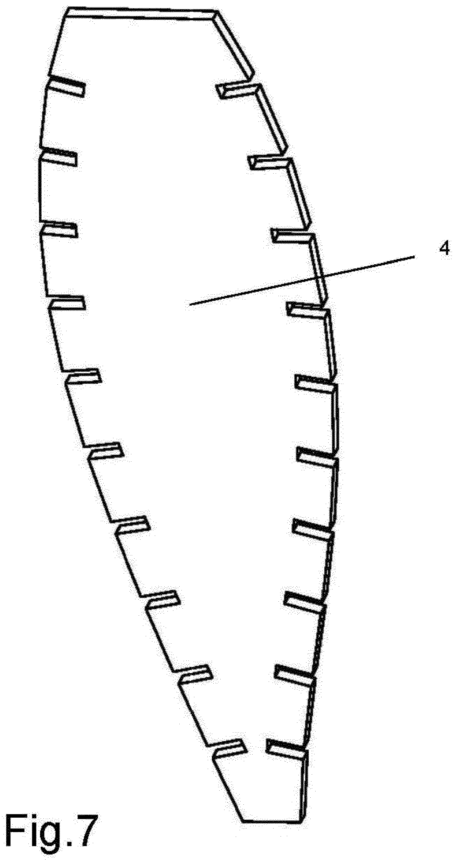

As can be seen in figures 4 and 5, the frames (4) have a central hollowing (4.1), to lighten weight, although, if required, they can dispense with that central hollowing as can be seen in figures 6 and 7.

According to a preferred embodiment, the central longitudinal profiles (3.1), the lateral longitudinal profiles (3.2 and 3.3) and also the reinforcement sections or frames (4), are made of a composite material, and preferably of a composite material reinforced with carbon fibre.

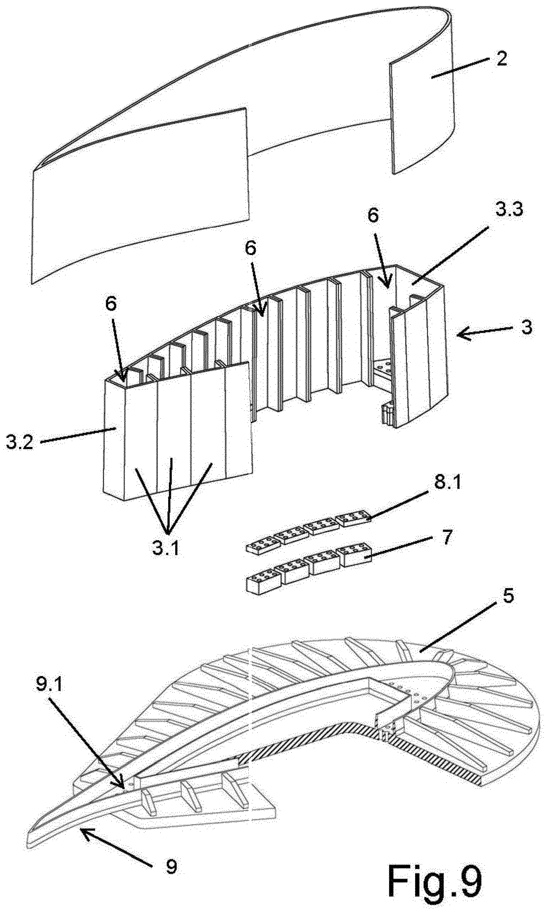

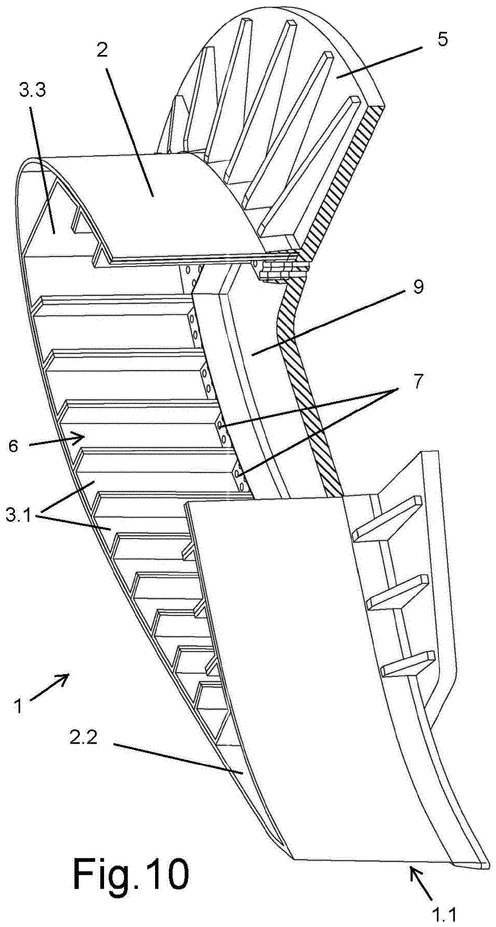

In addition, the invention proposes a novel system for attaching the general body (1) of the blade to a root part (5), through which the blade will be attached to the corresponding hub. This same attachment system is also applicable for attaching the structural segments (1.1) of the general body (1) of the blade, when it offers a segmented embodiment. This attachment can be carried out at the point of installation of the wind turbine and enables a blade to be obtained with a structural concept that optimises the use of materials and reduces the overall weight of the final product, obtaining a lighter and more stable, and therefore more efficient wind turbine blade;

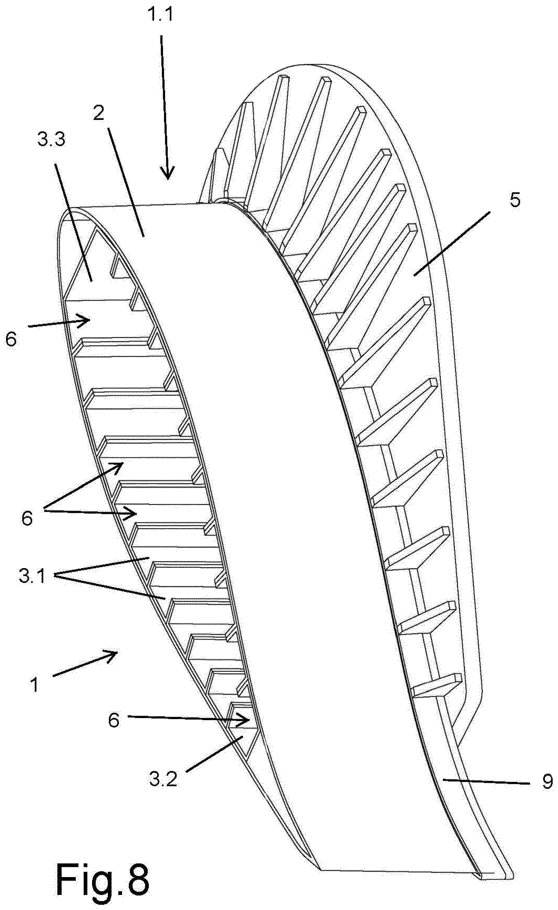

Figure 8 shows a structural segment (1.1) of the general body (1) of the blade attached to said root part (5) that allows the attachment of the blade to the corresponding hub of the wind turbine. The attachment is carried out as follows:
As can be seen in figures 9 and 10, there is an element that will be identified as the receiver component (9) that can be a single piece with the root part (5) or be independent from the latter and attach thereto through the corresponding, conventional attachment means.

Figures 8, 9 and 10 have represented the version in which the receiver component (9) is a single piece with respect to the root part (5), so as not to unnecessarily complicate the appreciation of that which makes up the essence of the attachment system for attaching a structural segment (1.1) or the general body (1) of the blade that is the same in both versions.

As can be seen in Figure 9, the receiver component (9) defines a housing (9.1), in which the mouth of a structural segment (1.1) of the blade or the mouth of the general body (1) of the blade can be embedded, depending on whether we are respectively in a segmented embodiment of the general body (1) of the blade or in the simplest version, in which the general body (1) of the blade is a single element.

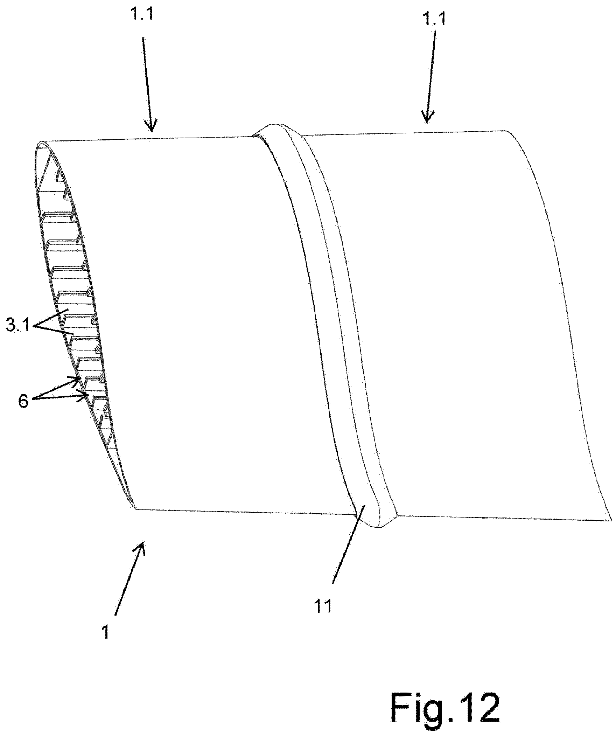

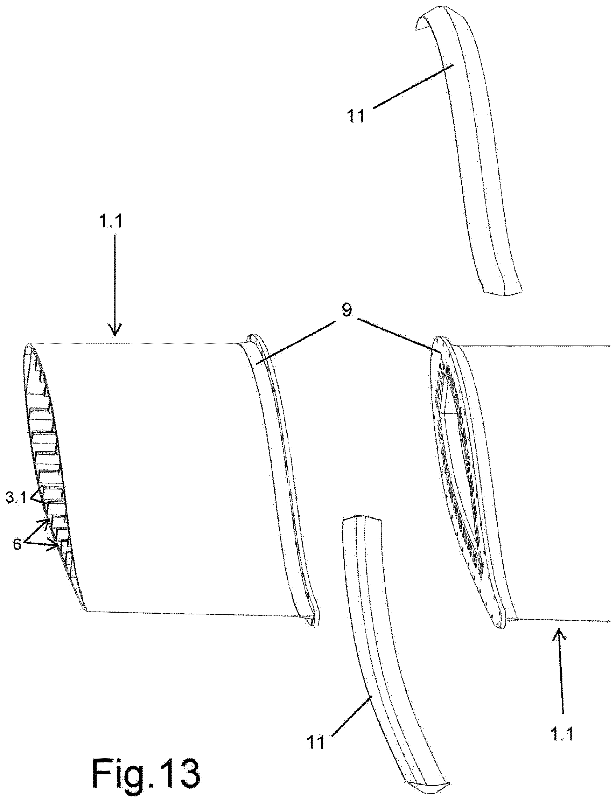

As can be seen in figures 12, 13 and 14, having determined the central box (3) by a series of central longitudinal profiles (3.1) with a "U" configuration, it is feasible to define a series of cavities (6) that also are defined in the lateral longitudinal profiles (3.2 and 3.3).

The cavities (6) of the central box (3) are reciprocally facing one or more cavities that define the walls and base of the housing (9.1), of the receiver component (9).

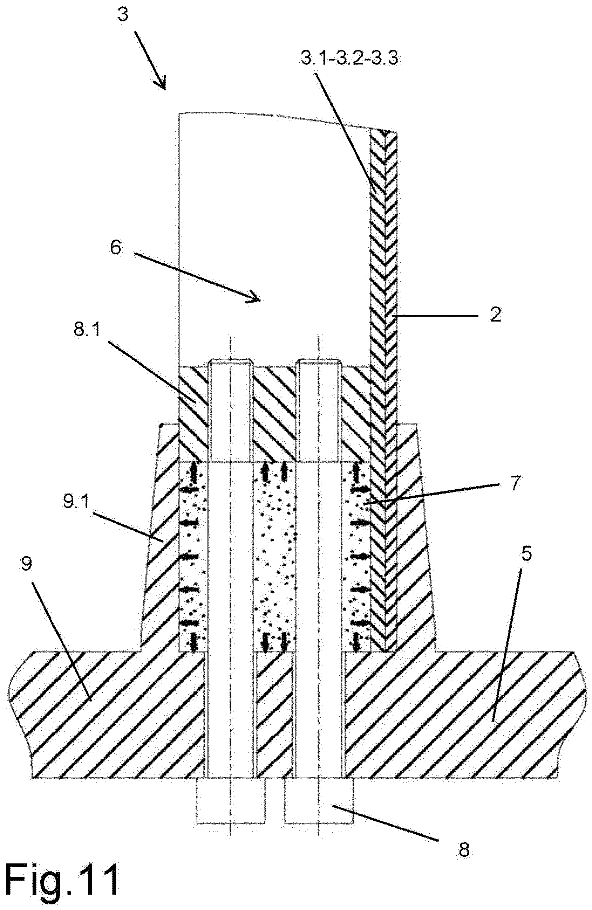

A deformable material (7), which is preferably an elastomer, is placed inside at least one of these cavities thus defined, see figure 8. The deformable material (7) has a geometry that allows for one or a series of pressure application means to be suited and integrated on the same, these means being able to be mechanical, hydraulic, pneumatic, piezoelectric or other, and preferably mechanical. In a preferred solution of the invention, said pressure means will be formed by one or a series of screws (8) and their respective nuts (8.1), as can be seen in Figure 11.

Once the deformable material (7) is placed in position, pressure will be applied through the pressure application means, in this case the screws (8) on said deformable material (7). This deformable material (7), given the pressure received, will deform and transfer that pressure to the contours of the cavities (6) and the housing (9.1) where it has been incorporated.

The pressure applied by the deformable material (7) on the wall of the cavity or cavities (6) and the corresponding wall or walls of the housing (9.1), will greatly increase the friction between the deformable material (7) and the walls where it is housed, making it possible to avoid movement between the same and the load transmission. The value of the pressure applied by the deformable material (7) may not exceed the breaking limit of the material that defines the housings thereof, thus ensuring correct fastening without damaging the properties of the materials of the structure.

This same process would be applicable for forming wind turbine blades the general body (1) of which is determined by two or more sections of structural segments (1.1), for the attachment between them that in this case will house their two adjoining mouths in the housings (9.1) of a pair of receiver components (9).

Indeed, when the general body (1) of the blade is made up of two or more sections of structural segments (1.1), the attachment process between two structural segments (1.1) is the same as that followed for the assembly of the root part (5), since the corresponding mouth of the final end of each one of the two structural segments (1.1) to be attached is housed in the housing (9.1) of a receiver component (9).

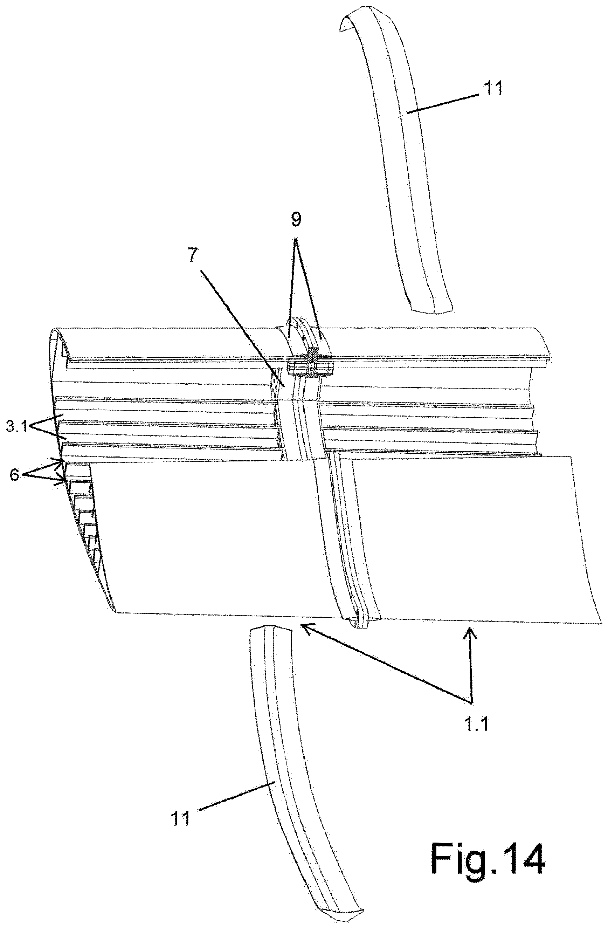

As in the previous case, in at least one pair of two cavities (6) of each one of the two structural segments (1.1) to be attached, the deformable material (7) is introduced, which will be arranged in the corresponding cavity or cavities (6) as well as inside the housing (9.1) of the receiver component (9), as shown in figure 14.

Once the deformable material (7) is placed in position, pressure is applied through the pressure application means made up by the screws (8) and the nuts (8.1) thereof on said deformable material (7). This deformable material (7), given the pressure received, will deform and transfer that pressure to the contours of the cavities (6) where it has been incorporated, as well as against the corresponding wall or walls of the housing (9.1) of two receiver components (9).

The pressure applied by the deformable material (7) on the walls of the housing thereof will greatly increase the friction between the deformable material (7) and the walls of said housings, generating a fastening between each structural segment (1.1) and the corresponding receiver component (9) thereof, which makes it possible to avoid the movement between them and the load transmission.

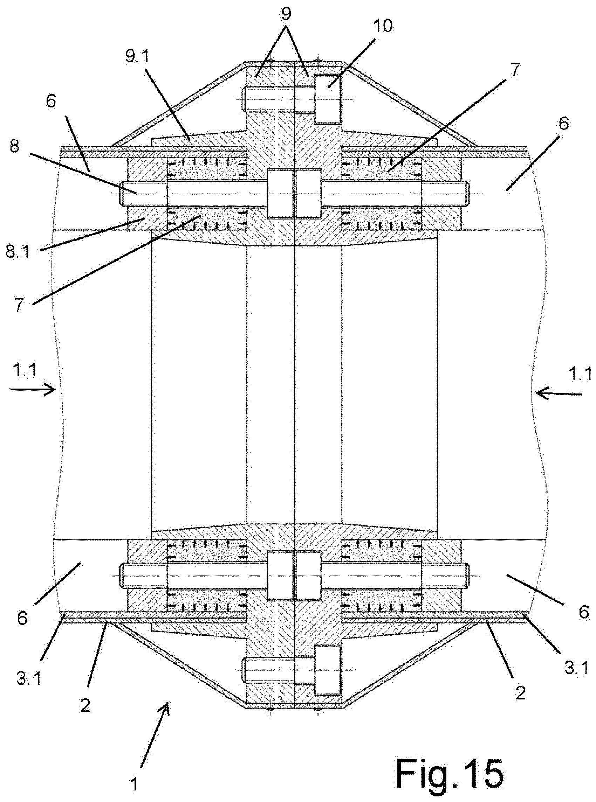

As can be seen in figure 15, the two receiver components (9), of the two structural segments (1.1) to be attached, are in turn attached to each other through conventional tying means that, according to a non-limiting exemplary practical embodiment are, in this case, screws (10).

Figures 12, 13 and 14 show a non-limiting exemplary practical embodiment, according to which the area of the two receiver components (9) is covered by cover elements (11).

According to a variant of practical embodiment, the two receiver components (9) of two structural segments (1.1) to be attached have been provided to be made in a single piece that has openings for passage to be able to actuate the screws (8) in rotation or that has the pressure means integrated; so that the actuation can be carried out with a one-piece embodiment of such receiver components (9).

In this way, a simple, light and economical attachment system is achieved, but at the same time robust and safe, by means of a deformable material (7) and the pressure application means (8) thereof that connect and tie together both the general body (1) of the blade or a structural segment (1.1) of said general body (1) to the corresponding root part (5), as well as the different structural segments (1.1) of the general body (1) of the blade, when it has a segmented structure defined by two or more sections.

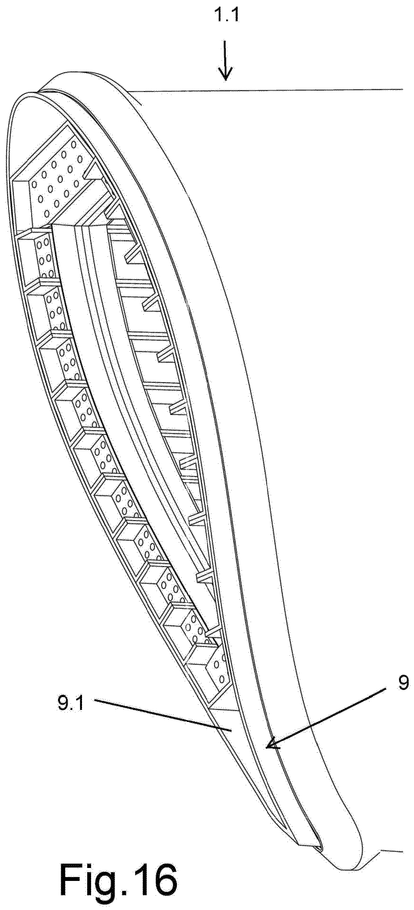

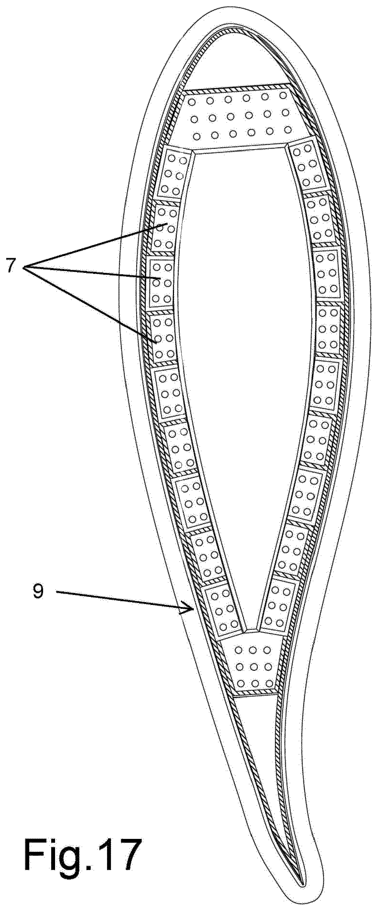

Obviously, and depending on the stiffness required in the attachment, more or fewer parts made of deformable material (7) will be used. Figures 16 and 17 show an exemplary practical embodiment, with a series of parts made of deformable material (7), but a higher or lower number of these parts made of deformable material (7) can be used as required, both in the attachment between two structural segments (1.1), and in the attachment of one of these or of the general body (1) of the blade to the root part.

## Claims

1. A process for manufacturing a wind turbine blade, wherein the process comprises the following phases:
- formation of the general body (1) of the blade by a central structural box (3) determined by a series of longitudinal structural profiles (3.1, 3.2, 3.3) attached together, wherein said longitudinal structural profiles (3.1, 3.2, 3.3) are attached to one another through angled wings of each of said longitudinal structural profiles (3.1, 3.2, 3.3);
- assembly on the structural box (3) of an outer skin (2) acting as a fairing;
- arrangement, in relation to the mouth of the general body (1) of the blade or of two of the structural segments (1.1) thereof, when said general body (1) is segmented, of at least one receiver component (9), intended to embed said mouth therein;
- introduction of a deformable material (7) that is placed in cavities (6) defined by the longitudinal profiles (3.1, 3.2, 3.3) and a housing (9.1) of the receiver component (9); and
- attachment between the general body (1) of the blade or between the structural segments (1.1) thereof and the corresponding receiver component or components (9) applying pressure on the deformable material (7) through compression means (8).

2. The process for manufacturing a wind turbine blade, according to claim 1, **characterised in that** when the general body (1) of the blade has a segmented structure, formed by at least two adjoining sections of structural segments (1.1), each structural segment (1.1) is attached to the corresponding receiver component (9) through the deformable material (7) that is placed in the cavities (6) of the structural segment (1.1) and in the housing (9.1) of the receiver component (9), subsequently applying pressure on the deformable material (7), through the compression means (8), to later, and in the event that both receiver components (9) are independent, proceed to attach both adjoining receiver components (9) by means of a series of attachment means (10).

3. The process for manufacturing a wind turbine blade, according to claim 1 or 2, **characterised in that** the longitudinal structural profiles (3.1, 3.2, 3.3) are attached to one another by means of an adhesive.

4. A wind turbine blade manufactured by the process of any one of claims 1 to 3, wherein the blade type the general body (1) is made of a central structural box (3) and an outer skin (2), **characterised in that** the central box (3) is formed by a series of longitudinal structural profiles (3.1, 3.2, 3.3) attached to each other by angled wings of each of said longitudinal structural profiles (3.1, 3.2, 3.3), this general body (1) of the blade being attached to at least one receiver component (9), by means of a deformable material (7), which is placed in relation to cavities (6) defined by the longitudinal profiles (3.1, 3.2, 3.3) and a housing (9.1) of the receiver component (9), compression means (8) of the deformable material (7) being further provided.

5. The wind turbine blade according to claim 4, **characterised in that** when the general body (1) of the blade has a segmented structure, determined by at least two adjoining structural segments (1.1), these sections of adjoining structural segments (1.1) are preferably attached to two receiver components (9) by means of the deformable material (7), the compression means (8) of the deformable material (7) being further provided.

6. The wind turbine blade according to claim 4, **characterised in that** the longitudinal structural profiles (3.1) have a cross section in a general "U" shape.

7. The wind turbine blade according to claim 4, **characterised in that** the longitudinal profiles (3.2 and 3.3) forming the lateral faces of the box (3) have a geometry suitable for the variable separation between the suction and pressure faces along the blade.

8. The wind turbine blade according to claim 6, **characterised in that**, according to a preferred embodiment, the geometry of the different longitudinal structural profiles (3.1) is identical.

9. The wind turbine blade, according to claim 4, **characterised in that** the longitudinal structural profiles (3.1, 3.2, 3.3) are made of a composite material, preferably carbon fibre.

10. The wind turbine blade, according to claim 5, **characterised in that** the two receiver components (9) can be made up in a single piece.

11. The wind turbine blade according to claim 4 or 5, **characterised in that** the deformable material (7) is an elastomer material.

12. The wind turbine blade according to claim 4 or 5, **characterised in that** the pressure element (8) that is placed in the deformable material (7) is a mechanical element, such as a screw or the like.

13. The wind turbine blade, according to claim 4, **characterised in that** it can have a series of reinforcement components in a series of sections of the blade, by way of structural frames (4).

## Patentansprüche

1. Verfahren zum Herstellen eines Windturbinenblatts, wobei das Verfahren die folgenden Phasen umfasst:
- Bilden des allgemeinen Körpers (1) des Blatts durch einen mittleren Strukturkasten (3), der durch eine Reihe von aneinander angebrachten Längsstrukturprofilen (3.1, 3.2, 3.3) bestimmt ist, wobei die Längsstrukturprofile (3.1, 3.2, 3.3) durch abgewinkelte Flügel von jedem der Längsstrukturprofile (3.1, 3.2, 3.3) aneinander angebracht sind;
- Montieren einer Außenhaut (2) auf dem Strukturkasten (3), die als Verkleidung dient;
- Anordnen, in Bezug auf die Öffnung des allgemeinen Körpers (1) des Blatts oder von zwei Struktursegmenten (1.1) davon, wenn der allgemeine Körper (1) segmentiert ist, mindestens einer Aufnahmekomponente (9), die dazu bestimmt ist, die Öffnung darin einzubetten;
- Einbringen eines verformbaren Materials (7), das in Hohlräumen (6) platziert wird, die durch die Längsprofile (3.1, 3.2, 3.3) und ein Gehäuse (9.1) der Aufnahmekomponente (9) definiert sind; und
- Anbringen zwischen dem allgemeinen Körper (1) des Blatts oder zwischen den Struktursegmenten (1.1) davon und dem oder den entsprechenden Aufnahmekomponente(n) (9), die über Verdichtereinrichtungen (8) Druck auf das verformbare Material (7) ausüben.

2. Verfahren zum Herstellen eines Windturbinenblatts nach Anspruch 1, **dadurch gekennzeichnet, dass**, wenn der allgemeine Körper (1) des Blatts eine segmentierte Struktur aufweist, die aus mindestens zwei aneinandergrenzenden Abschnitten von Struktursegmenten (1.1) gebildet ist, jedes Struktursegment (1.1) an der entsprechenden Aufnahmekomponente (9) durch das verformbare Material (7) befestigt wird, das in den Hohlräumen (6) des Struktursegments (1.1) und in der Aufnahme (9.1) der Aufnahmekomponente (9) platziert ist, wobei anschließend über die Verdichtereinrichtungen (8) Druck auf das verformbare Material (7) ausgeübt wird, um später und für den Fall, dass beide Aufnahmekomponenten (9) unabhängig sind, die zwei aneinandergrenzenden Aufnahmekomponenten (9) mittels einer Reihe von Anbringungseinrichtungen (10) zu verbinden.

3. Verfahren zum Herstellen eines Windturbinenblatts nach Anspruch 1 oder 2, **dadurch gekennzeichnet, dass** die Längsstrukturprofile (3.1, 3.2, 3.3) mittels eines Klebstoffs aneinander angebracht sind.

4. Windturbinenblatt, gefertigt durch das Verfahren nach einem der Ansprüche 1 bis 3, wobei der Blatttyp der allgemeine Körper (1) aus einem mittleren Strukturkasten (3) und einer Außenhaut (2) gefertigt ist, **dadurch gekennzeichnet, dass** der mittlere Kasten (3) aus einer Reihe von Längsstrukturprofilen (3.1, 3.2, 3.3) gebildet ist, die durch abgewinkelte Flügel von jedem der genannten strukturellen Längsprofile (3.1, 3.2, 3.3) aneinander angebracht sind, wobei dieser allgemeine Körper (1) des Blatts mittels eines verformbaren Materials (7), das in Bezug auf die durch die Längsprofile (3.1, 3.2, 3.3) und eine Aufnahme (9.1) des Aufnahmeteils (9) definierten Hohlräume (6) angeordnet ist, an mindestens einer Aufnahmekomponente (9) angebracht ist, wobei ferner Verdichtereinrichtungen (8) für das verformbare Material (7) bereitgestellt sind.

5. Windturbinenblatt nach Anspruch 4, **dadurch gekennzeichnet, dass**, wenn der allgemeine Körper (1) des Blatts eine segmentierte Struktur aufweist, die durch mindestens zwei aneinandergrenzende Struktursegmente (1.1) bestimmt ist, diese Abschnitte aneinandergrenzender Struktursegmente (1.1) vorzugsweise mittels des verformbaren Materials (7) an zwei Aufnahmekomponenten (9) angebracht sind, wobei ferner die Verdichtereinrichtungen (8) des verformbaren Materials (7) bereitgestellt sind.

6. Windturbinenblatt nach Anspruch 4, **dadurch gekennzeichnet, dass** die Längsstrukturprofile (3.1) einen allgemein U-förmigen Querschnitt aufweisen.

7. Windturbinenblatt nach Anspruch 4, **dadurch gekennzeichnet, dass** die Längsprofile (3.2 und 3.3), die die Seitenflächen des Kastens (3) bilden, eine Geometrie aufweisen, die für die variable Trennung zwischen den Saug- und Druckflächen entlang des Blatts geeignet ist.

8. Windturbinenblatt nach Anspruch 6, **dadurch gekennzeichnet, dass** die Geometrie der verschiedenen Längsstrukturprofile (3.1) gemäß einer bevorzugten Ausführungsform identisch ist.

9. Windturbinenblatt nach Anspruch 4, **dadurch gekennzeichnet, dass** die Längsstrukturprofile (3.1, 3.2, 3.3) aus einem Verbundwerkstoff, vorzugsweise aus Kohlefaser, gefertigt sind.

10. Windturbinenblatt nach Anspruch 5, **dadurch gekennzeichnet, dass** die zwei Aufnahmekomponenten (9) aus einem einzigen Stück gefertigt sein können.

11. Windturbinenblatt nach Anspruch 4 oder 5, **dadurch gekennzeichnet, dass** das verformbare Material (7) ein elastomeres Material ist.

12. Windturbinenblatt nach Anspruch 4 oder 5, **dadurch gekennzeichnet, dass** das in das verformbare Material (7) eingebrachte Druckelement (8) ein mechanisches Element ist, wie beispielsweise eine Schraube oder dergleichen.

13. Windturbinenblatt nach Anspruch 4, **dadurch gekennzeichnet, dass** es eine Reihe von Verstärkungselementen in einer Reihe von Abschnitten des Blatts in Form von Strukturrahmen (4) aufweisen kann.

## Revendications

1. Procédé de fabrication d'une pale d'éolienne, dans lequel le procédé comprend les phases suivantes :
- formation du corps général (1) de la pale par une boîte structurelle centrale (3) déterminée par une série de profilés structurels longitudinaux (3.1, 3.2, 3.3) assemblés entre eux, dans lesquels lesdits profilés structurels longitudinaux (3.1, 3.2, 3.3) sont assemblés entre eux par des ailes inclinées de chacun desdits profilés structurels longitudinaux (3.1, 3.2, 3.3) ;
- assemblage, sur la boîte structurelle (3), d'une peau extérieure (2) faisant office de carénage ;
- agencement, par rapport à l'embouchure du corps général (1) de la pale ou de deux de ses segments structurels (1.1), lorsque ledit corps général (1) est segmenté, d'au moins un composant récepteur (9), destiné à intégrer ladite embouchure dans celui-ci ;
- introduction d'un matériau déformable (7) qui est placé dans des cavités (6) définies par les profilés structurels longitudinaux (3.1, 3.2, 3.3) et dans un boîtier (9.1) du composant récepteur (9) ; et
- fixation entre le corps général (1) de la pale ou entre ses segments structurels (1.1) et le ou les composants récepteurs (9) correspondants, par application d'une pression sur le matériau déformable (7) à l'aide d'un moyen de compression (8).

2. Procédé de fabrication d'une pale d'éolienne selon la revendication 1, **caractérisé en ce que**, lorsque le corps général (1) de la pale a une structure segmentée, formée par au moins deux sections attenantes des segments structurels (1.1), chaque segment structurel (1.1) est fixé au composant récepteur (9) correspondant par le biais du matériau déformable (7) qui est placé dans les cavités (6) du segment structurel (1.1) et dans le boîtier (9.1) du composant récepteur (9), en appliquant subséquemment une pression sur le matériau déformable (7), à l'aide d'un moyen de compression (8), pour ensuite, dans le cas où les deux composants récepteurs (9) sont indépendants, procéder à la fixation des deux composants récepteurs attenants (9) au moyen d'une série de moyens de fixation (10).

3. Procédé de fabrication d'une pale d'éolienne selon la revendication 1 ou 2, **caractérisé en ce que** les profilés structurels longitudinaux (3.1, 3.2, 3.3) sont fixés les uns aux autres au moyen d'un adhésif.

4. Pale d'éolienne fabriquée par le procédé selon l'une quelconque des revendications 1 à 3, dans laquelle le corps général (1) de la pale est constitué d'une boîte structurelle centrale (3) et d'une peau extérieure (2), **caractérisée en ce que** la boîte structurelle centrale (3) est formée par une série de profilés structurels longitudinaux (3.1, 3.2, 3.3) fixés entre eux par des ailes inclinées de chacun desdits profilés structurels longitudinaux (3.1, 3.2, 3.3), ce corps général (1) de la pale étant fixé à au moins un composant récepteur (9), au moyen d'un matériau déformable (7), qui est placé par rapport à des cavités (6) définies par les profilés structurels longitudinaux (3.1, 3.2, 3.3) et un boîtier (9.1) du composant récepteur (9), un moyen de compression (8) du matériau déformable (7) étant en outre prévu.

5. Pale d'éolienne selon la revendication 4, **caractérisée en ce que**, lorsque le corps général (1) de la pale a une structure segmentée, déterminée par au moins deux segments structurels attenants (1.1), ces sections des segments structurels attenants (1.1) sont de préférence fixées à deux composants récepteurs (9) au moyen du matériau déformable (7), le moyen de compression (8) du matériau déformable (7) étant en outre prévu.

6. Pale d'éolienne selon la revendication 4, **caractérisée en ce que** les profilés structurels longitudinaux (3.1) ont une section transversale en forme générale de « U ».

7. Pale d'éolienne selon la revendication 4, **caractérisée en ce que** les profilés structurels longitudinaux (3.2 et 3.3) formant les faces latérales de la boîte (3) ont une géométrie adaptée à la séparation variable entre l'intrados et l'extrados le long de la pale.

8. Pale d'éolienne selon la revendication 6, **caractérisée en ce que**, selon un mode de réalisation préféré, la géométrie des différents profilés structurels longitudinaux (3.1) est identique.

9. Pale d'éolienne selon la revendication 4, **caractérisée en ce que** les profilés structurels longitudinaux (3.1, 3.2, 3.3) sont constitués d'un matériau composite, de préférence une fibre de carbone.

10. Pale d'éolienne selon la revendication 5, **caractérisée en ce que** les deux composants récepteurs (9) peuvent être constitués d'une seule pièce.

11. Pale d'éolienne selon la revendication 4 ou 5, **caractérisée en ce que** le matériau déformable (7) est un matériau élastomère.

12. Pale d'éolienne selon la revendication 4 ou 5, **caractérisée en ce que** l'élément de pression (8) qui est placé dans le matériau déformable (7) est un élément mécanique, tel qu'une vis ou similaire.

13. Pale d'éolienne selon la revendication 4, **caractérisée en ce qu'**elle peut comporter une série de composants de renforcement dans une série de sections de la pale, au moyen de cadres structurels (4).
